# EUROPÄISCHE PATENTSCHRIFT

(11) **EP 1 536 877 B1**
(45) Veröffentlichungstag und Bekanntmachung des Hinweises auf die Patenterteilung: **07.06.2006**
(21) Anmeldenummer: 03794762.9
(22) Anmeldetag: 16.06.2003
(51) Int. Cl.: B01D 53/94, F01N 3/022, F01N 3/035

(54) **VERFAHREN ZUR ABGASNACHBEHANDLUNG UND VORRICHTUNG HIERZU**
METHOD FOR THE POST-TREATMENT OF EXHAUST GASES AND DEVICE THEREFOR
PROCEDE ET DISPOSITIF DE POST-TRAITEMENT DES GAZ D'ECHAPPEMENT

(30) Priorität: 05.09.2002 DE 10241063
(43) Veröffentlichungstag der Anmeldung: 08.06.2005
(73) Patentinhaber: ROBERT BOSCH GMBH, 70442 Stuttgart (DE)
(72) Erfinder: HARTHERZ, Patrik, 71640 Ludwigsburg (DE)
(86) Internationale Anmeldenummer: PCT/DE2003/002001
(87) Internationale Veröffentlichungsnummer: WO 2004/024301

(56) Entgegenhaltungen:
- WO-A-00/43102
- WO-A-00/74823
- WO-A-01/92694
- DE-A- 3 440 689
- US-A- 5 806 305
- US-A- 6 038 854

## Beschreibung

### Stand der Technik

Die Erfindung geht aus von einem Verfahren bzw. einer Anordnung nach der Gattung der unabhängigen Ansprüche. Aus der DE 199 04 068 A1 ist bereits ein Verfahren bekannt, bei dem Ozon an einer Abgabestelle in der Abgasleitung an das Abgas abgegeben wird, bevor das Abgas zum Partikelfilter gelangt. Weiterhin ist es bekannt, einem Partikelfilter bzw. einem Speicherkatalysator einen Oxidationskatalysator vorarschalten, um einen Russabbrand bzw. eine Abgasentstickung durch eine Erhöhung des Stickstoffdioxidanteils im Abgas zu unterstützen. Ein Oxidationskatalysator hat jedoch den Nachteil einer kleine Konverstonsrate bei der Umwandlung von Stickstoffmonoxid in Stickstoffdioxid bei Abgastemperaturen unterhalb von 250°C. Desweiteren ist ein Oxidationskatalysator schwefelempfmdlich und produziert aus Schwefeldioxid Schwefeltrioxid, das einen Speicherkatalysator vergiften kann. Darüber hinaus ist mit einem Oxidationskatalysator keine mengenmäßige Steuerung der Umwandlung von Stickstoffmonoxid in Stickstoffdioxid möglich.

Die DE 34 40 689 beschreibt ein Verfahren zum Vermindern von Schadstoffen in Auspuffgasen, bei dem Ozon in das Auspuffsystem des Motors eingeblasen wird.

Die US 6 038 854 beschreibt ein plasmagestützes System zur Abgasnachbehandlung, bei dem die Abgase eine Plasmazone durchströmen.

Die US 5 806 305 beschreibt eine Vorrichtung zur Abgasnachbehandlung, bei der außerhalb des Abgasstroms erzeugtes Ozon entweder der Brennkraftmaschine oder den Abgasen zugeführt wird.

Die WO 01/92 694 beschreibt eine Vorrichtung zur Beseitigung von Ruß und Stickoxiden aus Abgasen von Dieselmotoren, bei der das Abgas nacheinander ein Partikelfilter, einen Plasmareaktor und einen katalytischen Reaktor durchströmt.

Die WO 00/43 102 beschreibt einen Plasmareaktor zur plasmagestützten Abgasnachbehandlung, bei dem das Abgas den Reaktor durchströmt.

Die WO 00/74 823 beschreibt eine Anordnung mit einem Rußfilter und einem Reaktor zur Abgasentsfirkung, bei der dem Abgastrakt als Reduktionsmittel Ammoniak zugeführt wird.

### Vorteile der Erfindung

Das erfmdungsgemäße Verfahren bzw. die erfindungsgemäße Anordnung mit den kennzeichnenden Merkmalen der unabhängigen Ansprüche haben demgegenüber den Vorteil, mit einem oxidativ wirkenden Hilfsmittel sowohl eine effiziente Partikelbeseitigung als auch eine effiziente Abgasentstickung zu ermöglichen, wobei das oxidativ wirkende Hilfsmittel auch im Niedertemperaturbereich eine schwefeltolerante Oxidation des im Abgas vorhandenen Stickstofimonoxids gewährleistet. Darüber hinaus kann durch das oxidativ wirkende Hilfsmittel eine bedarfsgerechte Einstellung eines definierten Mengenverhältnisses von Stickstofbnonoxid zu Stickstoffdioxid im Abgas in Abhängigkeit von der Temperatur erfolgen, z.B. das Verhältnis 1:1 bei Temperaturen unterhalb von 250°C im Falle einer Abgasentstickung nach der Methode der selektiven katalytischen Reduktion. Das entstehende Stickstoffdioxid ist eine direkte Funktion des eingesetzten oxidativen Hilfsmittels und kann über eine definierte Erzeugung des oxidativen Hilfsmittels, insbesondere Ozon, geregelt werden. Besonders vorteilhaft ist hierbei, dass das oxidativ wirkende Mittel außerhalb des Abgasstroms erzeugt wird, sodass kein zusätzlicher Abgasgegendruck im Abgasstrang erzeugt wird und die Mittel zur Erzeugung relativ einfach und kostengünstig ausgeführt werden können.

Durch die in den abhängigen Ansprüchen und in der Beschreibung aufgeführten Maßnahmen sind vorteilhafte Weiterbildungen und Verbesserungen des in den unabhängigen Ansprüchen angegebenen Verfahrens bzw. der angegebenen Anordnung möglich.

### Zeichnung

Ausführungsbeispiele der Erfindung sind in der Zeichnung dargestellt und in der nachfolgenden Beschreibung näher erläutert.

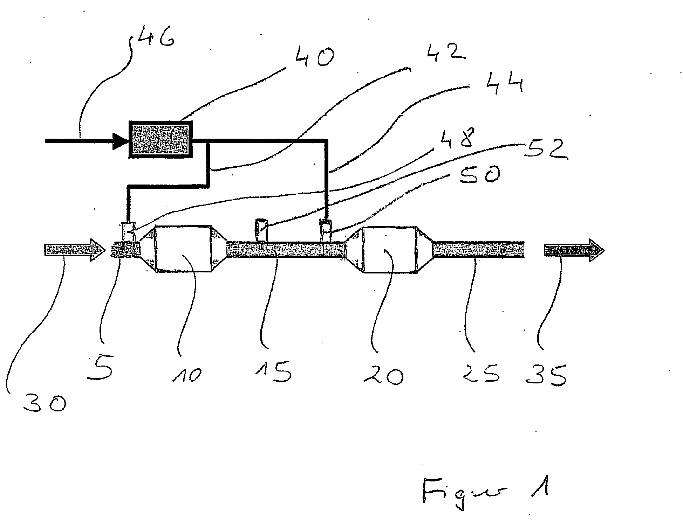

Die Figur 1 zeigt eine Abgasreinigungsvorrichtung mit einem Partikelfilter und einer Entstickungseinrichtung.

### Beschreibung der Ausführungsbeispiele

In der Figur 1 ist eine Abgasreinigungsvorrichtung abgebildat, bei der von einer Brennkraftmaschine kommendes Abgas 30 über eine Abgasleitung 5 in ein Dieselpartikelfilter 10 strömen kann. Eine weitere Abgasleitung 15 verbindet den Ausgang des Partikelfilters 10 mit einer als NOx-Speicherkatalysator ausgeführten Entstickungseinrichtung 20. Der Ausgang der Entstickungseinrichtung 20 ist mit einer weiteren Abgasleitung 25 verbunden, die das gereinigte Abgas 35 weiter über einen Schalldämpfer ins Freie befördert. Des weiteren ist als Mittel 40 zur Bereitstellung eines oxidativ folgenden Hilfsmittels ein Plasmagenerator zur Ozonerzeugung vorgesehen. Der Ozongenerator weist eine Luftzufuhr 46 auf. Der Ausgang des Ozongenerators ist mit einer ersten Ozonleitung 42 sowie mit einer zweiten Ozonleitung 44 verbunden. Am anderen Ende der weiteren Ozonleitungen 42 bzw. 44 sind eine erste Zufuhreinrichtung 48 bzw. eine zweite Zufuhreinrichtung 50 angeordnet, die jeweils in die Abgasleitung 5 bzw. in die Abgasleitung 15 hineinragen. Im Bereich der Abgasleitung 15 ist ferner ein Stickstoffdioxidmesselement 52 vorgesehen, in das ein Temperaturmesselement zur Messung der Temperatur des Abgases integriert ist.

Das von der Brennkraftmaschine herströmende Abgas 30 enthält Stickstoffmonoxid, Kohlenwasserstoffe, Wasser sowie Rusteilchen. Über die Zufuhreinrichtung 48 wird dem Abgas 30 vor dem Partikelfilter 10 Ozon zugeführt. Dadurch wird ein gewisser Anteil des Stickstoffmonoxidanteils des Abgases zur Stickstoffdioxid oxidiert, wodurch im Partikelfilter 10 ein kontinuierliches Russabbrennen durch Ausnutzen des an sich bekannten CRT-Effekts (CRT = "Continuously Regenerating Technology" bzw. "Continuously Regenerating Trap"; siehe auch http://www.dieselnet.com/tech/dpf crt . html) gewährleistet wird. Die Ozonzufuhr erfolgt hierbei in Abhängigkeit von der gemessenen Abgastemperatur zur Optimierung der Regeneration des Partikelfilters. Die Ozonerzeugung außerhalb des Abgasstrangs hat den Vorteil, dass kein zusätzlicher Abgasgegendruck erzeugter wird, dass der Reaktor zur Erzeugung des Ozons nicht verrußen kann und dass dieser auch keinen hohen Temperaturen ausgesetzt ist, sodass nur ein geringer technologischer Aufwand erforderlich ist, um eine für die vorliegenden Zwecke funktionstüchtige Anordnung bereitzustellen. Hinter dem Partikelfilter 10, also im Bereich der Abgasleitung 15, sind die Russteilchen größtenteils entfernt, der Stickstoffmonoxidanteil ist jedoch im Vergleich zum Abgas im Eingangsbereich des Dieselpartikelfilters, also nach Zugabe des Ozons durch die erste Zufuhreinrichtung 48, etwas erhöht. Das Stickstoffdioxidmesselement 52 registriert den tatsächlichen Stickstoffdioxidanteil und erlaubt einem nicht näher dargestellten Steuergerät eine entsprechende Ansteuerung des Ozongenerators 40 bzw. der Zufuhreinrichtungen 48 bzw. 50, um eine einwandfreie Funktion des nachgeordneten Speicherkatalysators 20 zu gewährleisten. Dabei wird insbesondere durch Zufuhr von Ozon über die Zufuhreinrichtung 50 sichergestellt, dass das Abgas beim Eintritt in den Speicherkatalysator einen möglichst hohen Anteil an Stickstoffdioxid aufweist, dass vom Speicherkatalysator gut eingelagert wird und damit effektiv zur Stickstoff reduziert werden kann. Über die Abgasleitung 25 verlässt das gereinigte Abgas 35 die illustrierte Anordnung und enthält an dieser Stelle im Wesentlichen noch Stickstoff und Wasser.

In einer alternativen Ausführungsform kann dem Speicherkatalysator noch ein Oxidationskatalysator nachgeschaltet sein, um noch im Abgas verbliebene Kohlenwasserstoffe zu oxidieren. In einer weiteren alternativen Ausführungsform können die beiden Zufuhreinrichtungen 48 und 50 statt aus einem insbesondere elektrisch ansteuerbaren Ventil aus einer Düse oder lediglich dem Leitungsende der Leitungen 42 bzw. 44 bestehen. In diesem Fall erfolgt die Steuerung der Ozonzufuhr durch eine elektrische Ansteuerung des Ozongenerators 40. In einer weiteren Alternative kann auch ganz auf eine zweite Zufuhrstelle verzichtet werden, es kann also die zweite Ozonleitung 44 und die zweite Zufuhreinrichtung 50 weggelassen werden und das Ozon lediglich über die Ozonleitung 42 dem Abgastrakt zugeführt werden. Dies ist insbesondere im Falle einer alternativen Ausgestaltung der Entstickungseinrichtung 20 als Einrichtung, die auf dem Verfahren der selektiven katalytischen Reduktion beruht (siehe auch http: //www.dieselnet.com/tech/cat scr.htm1), möglich. Dann erfolgt die Regelung der Ozonzufuhr ausschließlich über die Dosierstelle im Bereich der Abgasleitung 5 vor dem Partikelfilter 10, indem an dieser Stelle genügend Ozon zugeführt wird, sodass hinter dem Dieselpartikelfilter genügend Stickstoffdioxid übrig bleibt, um eine einwandfreie Funktion der Entstickungseinrichtung zu gewährleisten. Das Partikelfilter 10 kann wahlweise auch katalytisch beschichtet ausgeführt werden. Alternativ oder im Kombination zu einer laufenden Regeneration des Partikelfilters kann auch vorgesehen sein, die Ozonzufuhr so zu steuern, dass das Partikelfilter 10 nur im Notfall regeneriert wird, während die Entstickung des Abgases kontinuierlich abläuft. Hierzu wird dann vorzugsweise über die zweite Zufuhreinrichtung 50 das Ozon zugeführt und nur im Falle einer Notfallregenation des Partikelfilters 10 die Zufuhreinrichtung 52 aktiviert. Die Notfallregenation wird dann aktiviert, wenn der Abgasgegendruck einen bestimmten Grenzwert überschreitet. Zur Erkennung eines solchen Schwellenwerts ist in diesem Fall das Vorsehen mindestens eines Druckmesselements Voraussetzung, oder man verwendet alternativ zwei Drucksensoren, um über eine Differenzdruckbestimmung den Abgasgegendruck zu ermitteln. In einer weiteren alternativen Ausführungsform können neben Ozon auch andere Oxidationsmittel verwendet werden. Die oxidativen Hilfsmittel können anstelle einer Zuführung bzw. Einblasung in den Abgastrakt auch im Abgassstrang erzeugt werden, beispielsweise unter Verwendung eines vom Abgas durchströmbaren Plasmagenerators.

## Patentansprüche

1. Verfahren zur Nachbehandlung des Abgases einer Brennkraftmaschine, bei dem in dem Abgas enthaltene Partikel unter zumindest zeitweisem Einsatz eines oxidativ wirkenden Hilfsmittels zumindest teilweise beseitigt werden, **dadurch gekennzeichnet, dass** in einem weiteren Schritt eine zumindest teilweise Entstickung des Abgases erfolgt, wobei das oxidativ wirkende Mittel derart dosiert dem Abgas zugeführt wird, dass die Entstickung des Abgases unterstützt wird, wobei das oxidativ wirkende Mittel außerhalb des Abgasstroms erzeugt wird, wobei die Erzeugung des oxidativ wirkenden Mittels in dosierter Weise erfolgt, wobei zur zumindest teilweisen Beseitigung der Partikel ein Partikelfilter verwendet wird und wobei als oxidativ wirkendes Mittel Ozon verwendet wird.

2. Verfahren nach Anspruch 1, **dadurch gekennzeichnet, dass** der StickstoffdioxidAnteil des Abgases bestimmt wird und dass in Abhängigkeit vom Stickstoffdioxidanteil das oxidativ wirkende Hilfsmittel zugefiihrt wird.

3. Verfahren nach Anspruch 2, **dadurch gekennzeichnet, dass** der StickstoffdioxidAnteil in Strömungsrichtung des Abgases hinter der Stelle bestimmt wird, an der die Partikelbeseitigung erfolgt.

4. Verfahren nach einem der vorhergehenden Ansprüche, **dadurch gekennzeichnet, dass** die Temperatur des Abgases gemessen wird und dass in Abhängigkeit von der Temperatur des Abgases die Dosierung des oxidativ wirkenden Mittels erfolgt.

5. Verfahren nach einem der vorhergehenden Ansprüche, **dadurch gekennzeichnet, dass** das oxidativ wirkende Mittel in einem Plasmagenerator erzeugt wird.

6. Verfahren nach einem der vorhergehenden Ansprüche, **dadurch gekennzeichnet, dass** die Zudosierung des oxidativ wirkenden Mittels vor und hinter dem Partikelfilter erfolgt.

7. Verfahren nach einem der vorhergehenden Ansprüche, **dadurch gekennzeichnet, dass** zur zumindest teilweisen Entstickung des Abgases ein Speicherkatalysator oder eine Anordnung zur selektiven katalytischen Reduktion verwendet wird.

8. Anordnung zur Nachbehandlung des Abgases einer Brennkraftmaschine, mit einem Partikelfilter und Mitteln zur Bereitstellung eines oxidativ wirkenden Hilfsmittels für den Betrieb des Pattikelfilters, **dadurch gekennzeichnet, dass** in Strömungsrichtung des Abgases hinter dem Partikelfilter (10) eine Entstickungseimichtung (20) zur zumindest teilweisen Entstickung des Abgases angeordnet ist, wobei die Mittel (40, 46, 42, 44, 48, 50) das oxidativ wirkende Mittel außerhalb des Abgasstroms dosiert erzeugen und dem Abgas zufuhren, wobei das oxidativ wirkende Mittel Ozon ist.

## Claims

1. Method for the aftertreatment of the exhaust gas from an internal combustion engine, in which particulates contained in the exhaust gas are at least partially eliminated by at least temporarily using an auxiliary agent with an oxidizing action, **characterized in that** in a further step the exhaust gas is at least partially deNOxed, with the agent that has an oxidizing action being fed to the exhaust gas in metered fashion, in such a manner as to boost the deNOxing of the exhaust gas, the agent which has an oxidizing action being generated outside the exhaust-gas stream, the agent which has an oxidizing action being generated in a metered fashion, a particulate filter being used for the at least partial elimination of the particulates, and ozone being used as the agent with an oxidizing action.

2. Method according to Claim 1, **characterized in that** the nitrogen dioxide content of the exhaust gas is determined, and **in that** the auxiliary agent with an oxidizing action is supplied as a function of the nitrogen dioxide content.

3. Method according to Claim 2, **characterized in that** the nitrogen dioxide content is determined downstream of the location at which the particulate elimination takes place, as seen in the direction of flow of the exhaust gas.

4. Method according to one of the preceding claims, **characterized in that** the temperature of the exhaust gas is measured, and **in that** the agent with an oxidizing action is metered as a function of the temperature of the exhaust gas.

5. Method according to one of the preceding claims, **characterized in that** the agent with an oxidizing action is generated in a plasma generator.

6. Method according to one of the preceding claims, **characterized in that** the agent with an oxidizing action is metered in upstream and downstream of the particulate filter.

7. Method according to one of the preceding claims, **characterized in that** a storage catalytic converter or a selective catalytic reduction arrangement is used for the at least partial deNOxing of the exhaust gas.

8. Arrangement for the aftertreatment of the exhaust gas from an internal combustion engine, having a particulate filter and means for providing an auxiliary agent which has an oxidizing action for operation of the particulate filter, **characterized in that** a deNOxing device (20) for at least partially deNOxing the exhaust gas is arranged downstream of the particulate filter (10), as seen in the direction of flow of the exhaust gas, the means (40, 46, 42, 44, 48, 50) generating the means with an oxidizing action in metered fashion outside the exhaust-gas stream and feeding it to the exhaust gas, the agent with an oxidizing action being ozone.

## Revendications

1. Procédé de post-traitement des gaz d'échappement d'un moteur à combustion interne, selon lequel on élimine au moins partiellement des particules contenues dans les gaz d'échappement en utilisant au moins temporairement un agent oxydant,
**caractérisé en ce que**
dans une autre étape les gaz d'échappement sont au moins partiellement dénitrurés, l'agent oxydant étant amené de manière dosée pour favoriser la dénitruration des gaz d'échappement,
l'agent oxydant est généré à l'extérieur du courant de gaz d'échappement, la génération de l'agent oxydant s'effectuant de manière dosée, on utilise un filtre à particules pour l'élimination au moins partielle des particules, et
l'agent oxydant est de l'ozone.

2. Procédé selon la revendication 1,
**caractérisé en ce qu'**
on détermine la proportion de dioxyde d'azote dans les gaz d'échappement, et l'agent oxydant est ajouté en fonction de la proportion de dioxyde d'azote.

3. Procédé selon la revendication 2,
**caractérisé en ce qu'**
on détermine la proportion de dioxyde d'azote en aval de l'endroit auquel s'effectue l'élimination des particules dans la direction d'écoulement des gaz d'échappement.

4. Procédé selon l'une quelconque des revendications précédentes,
**caractérisé en ce qu'**
on mesure la température des gaz d'échappement et le dosage de l'agent oxydant s'effectue en fonction de la température des gaz d'échappement.

5. Procédé selon l'une quelconque des revendications précédentes,
**caractérisé en ce que**
l'agent oxydant est généré dans un générateur de plasma.

6. Procédé selon l'une quelconque des revendications précédentes,
**caractérisé en ce que**
le dosage de l'agent oxydant s'effectue en amont et en aval du filtre à particules.

7. Procédé selon l'une quelconque des revendications précédentes,
**caractérisé en ce que**
pour la dénitruration du moins partielle des gaz d'échappement on utilise un catalyseur à accumulation ou un dispositif pour la réduction catalytique sélective.

8. Dispositif de post-traitement des gaz d'échappement d'un moteur à combustion interne, comprenant un filtre à particules et des moyens pour fournir un agent oxydant pour le fonctionnement du filtre à particules,
**caractérisé en ce que**
dans la direction d'écoulement des gaz d'échappement, un dispositif de dénitruration (20) est prévu en aval du filtre à particules (10) pour la dénitruration au moins partielle des gaz d'échappement, et
les moyens (40, 46, 42, 44, 48, 50) génèrent l'agent oxydant de manière dosée à l'extérieur du courant des gaz d'échappement et l'amènent dans les gaz d'échappement, et
l'agent oxydant est de l'ozone.
